# EUROPEAN PATENT SPECIFICATION

(11) **EP 1 312 049 B1**
(45) Date of publication and mention of the grant of the patent: **19.11.2008**
(21) Application number: 01934049.6
(22) Date of filing: 14.05.2001
(51) Int. Cl.: G07B 15/04, G07C 1/30, G07F 7/00

(54) **PARKING FEE SYSTEM**
PARKGEBÜHRSYSTEM
SYSTEME DE TARIF DE STATIONNEMENT

(30) Priority: 15.05.2000 FI 20001158
(43) Date of publication of application: 21.05.2003
(73) Proprietor: Payway Oy, 00510 Helsinki (FI)
(72) Inventor: HARJU, Heikki, FIN-48100 Kotka (FI)
(74) Representative: Holmström, Stefan Mikael
(86) International application number: PCT/FI2001/000465
(87) International publication number: WO 2001/088855

(56) References cited:
- EP-A1- 0 582 098
- WO-A1-95/11496
- DE-A1- 3 307 986
- DE-A1- 4 225 943
- DE-A1- 4 420 264
- DE-A1- 19 757 462
- GB-A- 2 320 970
- US-A- 4 703 164
- US-A- 5 940 481

## Description

The present invention relates to parking fee systems, particularly to fee systems in parking garages or corresponding restricted parking areas.

Known systems include fee systems in parking garages or areas, in which a vehicle arriving in a parking area receives a printed parking ticket by means of which the driver pays for the parking fee prior to returning to the vehicle. When the driver drives to the exit boom, the boom is opened utilizing the parking ticket paid for. In such a case, there is a parking fee device in the parking area for the purpose of payment, into which device the parking ticket is supplied. The device reads from a magnetic track on the ticket the printing time of the ticket, i.e. the starting time of the parking, calculates the price of the parking event on the basis of the tariffs in use, and shows then the price on the display of the parking fee device. After this, the driver pays for the parking fee in cash or possibly with a credit card accepted by the fee device. As a response to the payment of the parking fee, the device enters an acknowledgement and the time of the payment on the ticket. After this, the driver has to return to the vehicle within a predetermined time limit and drive to the exit boom. At the boom, there is a control device into which the ticket is supplied. The control device reads the acknowledgement of the payment from the ticket and opens the boom if the fee has been paid for and the time limit for exit has not been exceeded. A system functioning in this way is previously known from GB-A-2 320 970 or US-A-4 703 164, for instance.

The most significant weakness of the above-described system is that the payment takes a long time and a large number of parking fee devices are needed in the parking area. Queues are easily formed at parking fee devices in the parking areas, and it takes a long time to pay in cash. Drivers may also have to walk long distances to the parking fee devices in large parking areas, which is laborious and can even make it difficult to find the vehicle after paying.

An object of the present invention is to eliminate the above-mentioned problems by providing a user-friendly solution in which the payment of the parking fee is quick and simple and in which no cash or credit card is needed. This is achieved by means of a parking fee system comprising a parking ticket device, which comprises means for producing a parking ticket comprising an individual identifier at the beginning of the parking event; a parking fee centre, which maintains and processes information on the parking of vehicles in at least one parking area; and an exit control device which comprises means for checking the payment of the parking fee for the parking event relating to the parking ticket and for opening a boom or the like. Said parking system is characterized in that the parking ticket device comprises means for adding to the individual identifier of each parking ticket information on a tariff applied to the parking event; the parking fee centre is in connection with a mobile communication network and comprises means for receiving information comprising an individual identifier of a parking ticket including Information on a tariff applied to a parking event from a mobile station via said mobile communication network and for receiving a production time of the parking ticket, which production time is either included in the individual identifier of the parking ticket or transmitted by the parking ticket device, means for determining the starting time and price of the parking event on the basis of the received information, means for charging for the parking fee, means for producing an exit permit code as a response to the charging for the parking fee; and the exit control device comprises means for receiving the ticket-specific exit permit code produced by the parking fee centre, and means for opening a boom or the like as a response to the detection of the parking ticket corresponding to the received exit permit code.

The term 'parking fee centre' refers in this application generally to equipment for maintaining and processing data relating to separate parking events, parking tariffs used in parking areas, charging, and manners of payment selected by the users, for example. The equipment may comprise units relating both to a specific single parking area and to a parking system covering several parking areas.

The term 'identifier' refers to ticket-specific individual information, which may be for instance a number sequence printed out, information stored on a magnetic track or a bar code identifier.

An object of the invention is further a parking fee centre for maintaining and processing information on the parking of vehicles. Said parking fee centre is characterized in that it is in connection with a mobile communication network and comprises means for receiving information comprising an individual identifier of a parking ticket including information on a tariff applied to a parking event from a mobile station via said mobile communication network and for receiving a production time of the parking ticket, which production time is either included in the individual identifier of the parking ticket or transmitted by the parking ticket device, and for determining the starting time and price of the parking event on the basis of the received information, means for charging for the parking fee, and means for producing an exit permit code as a response to the charging for the parking fee.

An object of the invention is further a parking ticket device comprising means for producing a parking ticket comprising an identifier at the beginning of a parking event. Said parking ticket device is characterized in that it comprises means for adding to the parking ticket information required to set up a connection to a parking fee centre to pay for a parking fee with a mobile station by transmitting the identifier of the parking ticket to the parking fee center via a mobile communication network, and the parking ticket device is configured to produce the identifier for the parking ticket to contain information on a tariff applied to the parking event and to include information about a production time of the parking ticket in the identifier or to transmit said production time of the parking ticket to the parking fee center in order to indicate the starting time of the parking event.

The invention is based on the idea that when the parking ticket is provided with an identifier by means of which the price of the parking event in question and also the starting time, unless the starting time is transmitted by the parking ticked device, can be determined, the parking fee can be paid for via a mobile station by transmitting the identifier of the ticket to the parking fee centre. The exit boom is controlled by a ticket-specific exit permit code produced by the parking fee centre. The idea is that the parking fee has been paid for and acknowledged when the vehicle arrives at the exit boom, whereby the exit goes rapidly and unnecessary queues are avoided. The most significant advantage of the system is thus that the payment measures take a shorter time and are easier when the payment is performed via a mobile station. Thus, it is not necessary to have cash in hand or a credit card accepted by the fee device for the parking fee. In addition, the parking fee centre does not need to separately enquire the information on the tariff applied to the parking event from the garage-specific server and the tariff information does not have to be stored beforehand in the database of the parking fee centre for example but the parking fee centre receives the tariff information as part of each ticket-specific identifier.

In a first embodiment of the invention, a data transmission connection has been set up between the parking fee centre and the exit control device to transmit an exit permit code from the parking fee centre to the exit control device as a response to the charging for the parking fee. Thus, once the parking ticket is supplied into the exit control device, the device knows whether the parking event relating to the parking ticket in question has been paid for and can open the boom for the exiting vehicle.

In a second embodiment of the invention, the system comprises means for transmitting an acknowledgement to the mobile station as a response to the charging for the parking fee. Owing to this acknowledgement, the driver of the vehicle, when driving to the exit boom, can be confident that the parking fee paid for via the mobile station has been successfully charged for. This allows avoidance of disruptive situations at the boom that might be brought about if the exit control device did not receive the exit permit code relating to the supplied parking ticket.

In a third embodiment of the invention, the parking ticket device comprises means for transmitting the starting time of the parking event relating to the identifier of the parking ticket to the parking fee centre. This can take place immediately after the production of the parking ticket, whereby the parking ticket device transmits a message to the parking fee centre on every ticket produced, and the parking fee centre stores this information and uses it when calculating the amount of the parking fee at the end of the parking event. The information can also be transmitted to the parking fee centre as a response to the enquiry transmitted by the parking fee centre and concerning the starting time.

Preferred embodiments of the invention are disclosed in the attached dependent claims.

The invention will now be described in greater detail, by way of example, with reference to the attached figures, of which

Figure 1 shows a system according to the invention, in which the identifier of a parking ticket is transmitted from a mobile station to a parking fee centre via a mobile communication network;

Figure 2 shows a system according to the invention, in which the parking fee centre consists of two parts, one of which comprises a payment terminal; and

Figure 3 shows a system according to the invention, in which the starting time of the parking event is contained in the identifier of the parking ticket.

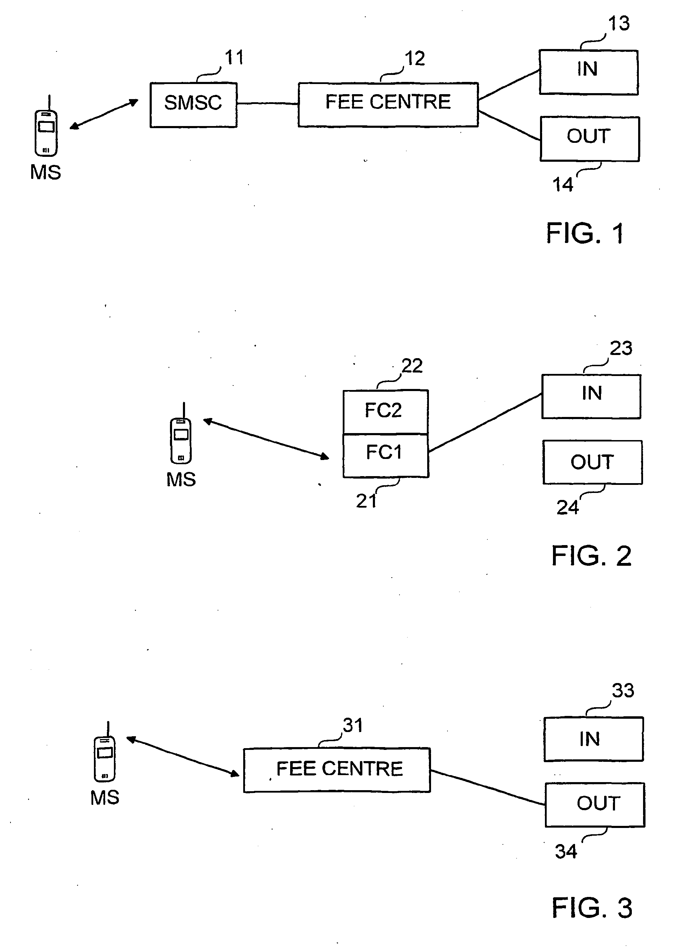

Figure 1 shows a system according to the invention, in which the identifier of a parking ticket is transmitted from a mobile station to a parking fee centre via a mobile communication network. The system comprises a mobile station MS, via which a connection is set up to a parking fee centre 12 through a short message service centre SMSC 11, as well as a parking ticket device 13 in connection with the parking fee centre 12, and an exit control device 14.

Instead of the short message service centre 11, a WAP (Wireless Application Protocol) server, an IVR (Interactive Voice Response) centre, or some other network element of a mobile communication system can form the interface to the parking fee centre.

When arriving in a boom-controlled parking garage, the driver drives in via the parking ticket device 13. He/she receives a printed parking ticket, after which he/she parks the car in an unoccupied parking place. A ticket-specific identifier has been printed on the parking ticket and is needed if the parking fee is to be paid for via a mobile station MS. For termination of the parking event, this example comprises a short message service number, to which the driver has to send a short message to pay for the parking fee. The service number is preferably printed on each parking ticket. When the parking event is to be terminated, the driver sends a short message containing the identifier on the ticket from the mobile station MS to the service number given. The identifier can consist of a number sequence including the identifiers of the parking garage operator, parking garage and parking event, for instance. The short message service centre 11 transmits the short message further to the parking fee centre 12. Next, the parking fee centre 12 sends an enquiry to the parking ticket device 13 via the mobile communication network concerning the starting time of the parking event, and calculates the amount of the parking fee on the basis of the starting time and the valid tariff. After this, the parking fee centre 12 performs the charging and sends an acknowledgement of the charging to the driver's mobile station MS via the short message service centre 11. Various manners of payment according to the client's wishes can be used, for example charging from a bank account, charging a pre-paid card or purse or charging afterwards in such a way that the parking fee is added to the driver's mobile telephone bill. The use of some manners of payment require that the mobile station subscribers be registered beforehand and the subscriber be identified for instance on the basis of the A subscriber identity, i.e. the caller's number. In this case, there must be a database in connection with the fee centre for maintaining the subscriber data and, for example, data on the manners of payment selected by the subscribers. Finally, the driver drives to the exit boom and inserts the parking ticket into the exit control device 14, whereby the exit control device 14 transmits the enquiry concerning the payment of the parking event indicated by the ticket to the parking fee centre 12. If the parking fee relating to the ticket has been paid for, the parking fee centre 12 gives an exit permit code to the exit control device 14 and the boom is opened.

In the above-described example, the functions of the parking fee centre 12 can be divided between the parking garage's own server and a server shared by the whole system. Hereby, the parking garage server can for example maintain information on when each parking event has begun, according to which tariff the parking is to be charged for, and whether the parking fee relating to a certain parking event has been paid for. Thus, the garage server is capable of calculating the amount of the parking fee and finally of transmitting the exit permit code to the exit control device 14. The server shared by the whole system can, in turn, attend to the reception of the identifier on the parking ticket via a mobile communication network, the charging, and the production of the exit permit code on the basis of the charging performed. The exit permit code can be transmitted via the parking garage's own server, whereby, having received the exit permit code from the server shared by the whole system, the garage server gives a transmission permit to the acknowledging short message to be sent to the driver. The information on the parking fee paid for is thus recorded in the garage server, and the exit control device 14 can enquire the payment of the fee of the garage's own server, whereby one can be more confident that the parking ticket relating to the parking event paid for is actually identified when it enters the exit control device 14.

The information comprising a ticket-specific identifier can be transmitted to the parking fee centre 12 also by calling a given service number with the mobile station MS, and said number can be printed on every parking ticket. In such a case, for instance an IVR service can be used, whereby the driver keys in the identifier of the parking ticket in accordance with the instructions heard as voice messages.

Figure 2 shows a system according to the invention, in which the parking fee centre consists of two parts, one of which comprises a payment terminal. The system disclosed comprises a mobile station MS, a parking fee centre 21, 22, as well as an exit control device 24 and a parking ticket device 23 in data transmission connection with the parking fee centre. The parking fee centre consists of a first part, i.e. a garage-specific part 21, and a second part, i.e. a part 22 shared by the whole system. The garage-specific parts 21 of several different parking garages can be connected to the part 22 shared by the whole system.

When arriving in a boom-controlled parking garage, the driver drives in via the parking ticket device 23, from which he/she receives a parking ticket, and parks the car in an unoccupied parking place. The parking ticket is provided with a ticket-specific identifier which is needed if the parking fee is to be paid via a mobile station MS. In the case of this example, the ticket-specific identifier is machine-readable, in other words it is stored on a magnetic track, for example. For the termination of the parking event, the driver inserts the parking ticket into the payment terminal belonging to the first, i.e. garage-specific, part 21 of the parking fee centre. Thus, contrary to the example of Figure 1, the driver has to move on to a payment terminal, which can be located in connection with a conventional cash payment device in the parking hall. However, in order to avoid queues, it is better to use a separate device as the payment terminal for payments performed via a mobile station. The payment terminal reads the identifier on the parking ticket and sends an enquiry to the garage server, concerning the information required for calculating the price, i.e. the starting time of the parking event and the tariff used. The server returns either this information or the calculated price to the payment terminal. The payment terminal is provided with a transceiver for wireless data transmission, for example data transmission based on the Blue Tooth technique, whereby the terminal sends the information concerning the payment to the payer's mobile station MS. After this, the payer acknowledges 'the bill' and returns it to the payment terminal. This can take place in such a way that the payer's identifier information required for the charging is returned from the mobile station MS, or in such a way that information on real payment is returned if the mobile station has a SIM credit card or an electronic purse. The payment terminal further sends information on the acceptance of the fee or of the payment thereof to the garage server. If the parking fee is added to a mobile telephone bill, for instance, the second part 22 of the parking fee centre, which can maintain information on the manners of payment selected by the users, attends to the charging. When the charging for the parking fee has been completed, the parking fee centre returns the stamping information of the ticket to the payment terminal. Thus, the parking ticket relating to the parking event paid for is stamped, in other words the first part 21 of the parking fee centre adds thereto the information on the fee charged for. This information functions as an exit permit code. Finally, the driver drives to the exit control device 24, which is opened when the exit permit code is read from the parking ticket. Thus, no data transmission connection between the parking fee centre 21, 22 and the exit control device 24 is required here.

Contrary to the above-described example, the payment terminal can return a ticket-specific identifier and a service number instead of the price to the display, whereby the payer calls the service number with his/her mobile station MS and informs the parking fee centre on the identifier, after which the payment proceeds in accordance with the example of Figure 1. The service number can also be transferred from the payment terminal to the mobile station MS by means of wireless data transmission.

Figure 3 shows a system according to the invention, in which the starting time of the parking event is included in the identifier of the parking ticket. The system disclosed comprises a mobile station MS, a parking fee centre 31, a parking ticket device 33 and an exit control device 34 in data transmission connection with the parking fee centre 31.

When arriving in the parking area, the driver acts in the same way as in the cases of Figures 1 and 2. The parking ticket device 33 prints an identifier on the parking ticket, containing in this example the starting time of the parking event and a service number which the driver has to call when wishing to terminate the parking event. The service number can function by means of the IVR technique, for instance, whereby the driver keys in the identifier on the ticket for the parking fee centre 31. In order for the parking fee centre 31 to be able to attend to the charging, it needs, in addition to the starting time of the parking event, the tariff information of the particular parking area. This tariff information can be stored in a database which is in connection with the parking fee centre 31. Alternatively, the tariff information can be included in the identifier of the parking ticket. Having calculated the amount of the parking fee, the parking fee centre 31 performs the charging in the manner selected by the client. As a response to the successful charging for the fee, the parking fee centre 31 sends an acknowledgement to the driver's mobile station MS and produces an exit permit code relating to the parking ticket in question. The exit permit code is transmitted to the exit control device 34 via a data transmission connection. When the driver finally drives to the exit control device 34 and supplies the parking ticket into it, the exit control device 34 compares the identifier on the ticket with the received exit permit code and opens the exit boom if the fee has been paid for. Thus, no data transmission connection between the parking ticket device 33 and the parking fee centre 31 is required.

In the examples of Figures 1 and 3, the service number which the driver calls when terminating the parking event can be either nationwide, garage-specific, parking-area-operator-specific or event-specific.

It is understandable that the above description and the related figures are only intended to illustrate the present invention. Different variations and modifications of the invention will be obvious to a person skilled in the art, without deviating from the scope of the invention defined in the attached claims.

## Claims

1. A parking fee system comprising
a parking ticket device (13, 23, 33), which comprises means for producing a parking ticket comprising an individual identifier at the beginning of a parking event;
a parking fee centre (12, 21, 22, 31), which maintains and processes information on the parking of vehicles in at least one parking area; and
an exit control device (14, 24, 34), which comprises means for checking the payment of the fee for the parking event relating to the parking ticket and for opening a boom or the like, **characterized in that**
the parking ticket device (13, 23, 33) comprises means for adding to the individual identifier of each parking ticket information on a tariff applied to the parking event;
the parking fee centre (12, 21, 22, 31) is in connection with a mobile communication network and comprises
means for receiving information comprising an individual identifier of a parking ticket including information on a tariff applied to a parking event from a mobile station (MS) via said mobile communication network and for receiving a production time of the parking ticket, which production time is either included in the individual identifier of the parking ticket or transmitted by the parking ticket device,
means for determining the starting time and price of the parking event on the basis of said received information;
means for charging for the parking fee;
means for producing an exit permit code as a response to the charging for the parking fee; and
the exit control device (14, 24, 34) comprises means for receiving the ticket-specific exit permit code produced by the parking fee centre (12, 21, 22, 31); and
means for opening a boom or the like as a response to the detection of the parking ticket corresponding to the received exit permit code.

2. A parking fee system according to claim 1, **characterized in that** a data transmission connection has been set up between the parking ticket device (13, 23) and the parking fee centre (12, 21, 22) for transmitting the production time of the parking ticket, i.e. the starting time of the parking event, to the parking fee centre (12, 21, 22).

3. A parking fee system according to claim 1 or 2, **characterized in that** a data transmission connection has been set up between the parking fee centre (12, 31) and the exit control device (14, 34) for transmitting the exit permit code from the parking fee centre (12, 31) to the exit control device (14, 34) as a response to the charging for the parking fee.

4. A parking fee system according to any one of claims 1 to 3, **characterized in that** the parking fee system further comprises
means for transmitting an acknowledgement to the mobile station (MS) as a response to the charging for the parking fee.

5. A parking fee centre for maintaining and processing information on the parking of vehicles, **characterized in that**
the parking fee centre (12, 21, 22, 31) is in connection with a mobile communication network and comprises
means for receiving information comprising an individual identifier of a parking ticket including information on a tariff applied to a parking event from a mobile station (MS) via said mobile communication network and for receiving a production time of the parking ticket, which production time is either included in the individual identifier of the parking ticket or transmitted by the parking ticket device, and for determining the starting time and price of the parking event on the basis of the received information;
means for charging for the parking fee; and
means for producing an exit permit code as a response to the charging for the parking fee.

6. A parking ticket device, which comprises means for producing a parking ticket comprising an identifier at the beginning of a parking event, **characterized in that** the parking ticket device (13, 23, 33)
comprises means for adding to the parking ticket information required to set up a connection to a parking fee centre (12, 21, 22, 31) to pay for a parking fee with a mobile station (MS) by transmitting the identifier of the parking ticket to the parking fee center via a mobile communication network, and
the parking ticket device is configured to produce the identifier for the parking ticket to contain information on a tariff applied to the parking event, and to include information about a production time of the parking ticket in the identifier or to transmit said information about a production time of the parking ticket to the parking fee center in order to indicate the starting time of the parking event.

## Patentansprüche

1. Parkgebührsystem, enthalten:
eine Parkscheinvorrichtung (13, 23, 33), die eine Einrichtung umfasst, die einen Parkschein, der eine individuelle Kennzeichnung aufweist, zu Beginn eines Parkereignisses erzeugt;
ein Parkgebührzentrum (12, 21, 22, 31), das Informationen über das Parken von Fahrzeugen in wenigstens einem Parkbereich verwaltet und verarbeitet; und
eine Ausgangssteuervorrichtung (14, 24, 34), die eine Einrichtung enthält, die die Bezahlung der Gebühr für das Parkereignis überprüft, das sich auf den Parkschein bezieht, und eine Schranke oder dergleichen öffnet, **dadurch gekennzeichnet, dass**
die Parkscheinvorrichtung (13, 23, 33) eine Einrichtung enthält, die der individuellen Kennzeichnung jedes Parkscheins Informationen über einen Tarif hinzufügt, der auf das Parkereignis angewendet wird;
das Parkgebührzentrum (12, 21, 22, 31) mit einem mobilen Kommunikationsnetzwerk in Verbindung steht und enthält:
eine Einrichtung, die Informationen, die eine individuelle Kennzeichnung eines Parkscheins enthalten, die Informationen über einen Tarif beinhalten, der auf ein Parkereignis angewendet wird, von einer Mobilstation (MS) über das mobile Kommunikationsnetzwerk empfängt, und einen Erzeugungszeitpunkt des Parkscheins empfängt, wobei der Erzeugungszeitpunkt entweder in der individuellen Kennzeichnung des Parkscheins enthalten ist oder von der Parkscheinvorrichtung gesendet wird;
eine Einrichtung, die den Startzeitpunkt und den Preis des Parkereignisses auf der Basis der empfangenen Informationen bestimmt;
eine Einrichtung, die die Parkgebühr erhebt;
eine Einrichtung, die einen Ausgangserlaubniscode in Erwiderung der Erhebung der Parkgebühr erzeugt; und
die Ausgangssteuervorrichtung (14, 24, 34) eine Einrichtung enthält, die den parkscheinspezifischen Ausgangserlaubniscode empfängt, der vom Parkgebührzentrum (12, 21, 22, 31) erzeugt wird; und
eine Einrichtung, die eine Schranke oder dergleichen als eine Erwiderung auf die Erfassung des Parkscheins entsprechend dem empfangenen Ausgangserlaubniscodes öffnet.

2. Parkgebührsystem nach Anspruch 1, **dadurch gekennzeichnet, dass** eine Datensendeverbindung zwischen der Parkscheinvorrichtung (13, 23) und dem Parkgebührzentrum (12, 21, 22) eingerichtet wurde, die einen Erzeugungszeitpunkt des Parkscheins, d.h. den Startzeitpunkt des Parkereignisses, zum Parkgebührzentrum (12, 21, 22) sendet.

3. Parkgebührsystem nach Anspruch 1 oder 2, **dadurch gekennzeichnet, dass** eine Datensendeverbindung zwischen dem Parkgebührzentrum (12, 31) und der Ausgangssteuervorrichtung (14, 34) eingerichtet wurde, die den Ausgangserlaubniscode vom Parkgebührzentrum (12, 31) zur Ausgangssteuervorrichtung (14, 34) als eine Erwiderung auf die Erhebung der Parkgebühr sendet.

4. Parkgebührsystem nach einem der Ansprüche 1 bis 3, **dadurch gekennzeichnet, dass** das Parkgebührsystem weiterhin enthält:
eine Einrichtung, die eine Bestätigung zur Mobilstation (MS) als eine Erwiderung auf die Erhebung der Parkgebühr sendet.

5. Parkgebührzentrum, das Informationen über das Parken von Fahrzeugen verwaltet und verarbeitet, **dadurch gekennzeichnet, dass**
das Parkgebührzentrum (12, 21, 22, 31) in Verbindung mit einem mobilen Kommunikationsnetzwerk steht und enthält:
eine Einrichtung, die Informationen, die eine individuelle Kennzeichnung eines Parkscheins enthalten, die Informationen über einen Tarif beinhalten, der auf ein Parkereignis angewendet wird, von einer Mobilstation (MS) über das mobile Kommunikationsnetzwerk empfängt und einen Erzeugungszeitpunkt des Parkscheins empfängt, wobei der Erzeugungszeitpunkt entweder in der individuellen Kennzeichnung des Parkscheins enthalten ist oder von der Parkscheinvorrichtung gesendet wird; und den Startzeitpunkt und den Preis des Parkereignisses auf der Basis der empfangenen Informationen bestimmt; und
eine Einrichtung, die die Parkgebühr erhebt; sowie
eine Einrichtung, die einen Ausgangserlaubniscode als eine Erwiderung auf die Erhebung der Parkgebühr erzeugt.

6. Parkscheinvorrichtung, die eine Einrichtung enthält, die einen Parkschein, der eine Kennzeichnung enthält, zu Beginn eines Parkereignisses erzeugt, **dadurch gekennzeichnet, dass** die Parkscheinvorrichtung (13, 23, 33)
eine Einrichtung enthält, die dem Parkschein Informationen hinzufügt, die erforderlich sind, um eine Verbindung zu einem Parkgebührzentrum (12, 21, 22, 31) zur Bezahlung der Parkgebühr mit einer Mobilstation (MS) einzurichten, indem die Kennzeichnung des Parkscheins zum Parkgebührzentrum über ein mobiles Kommunikationsnetzwerk gesendet wird, und
die Parkscheinvorrichtung dazu eingerichtet ist, die Kennzeichnung für den Parkschein so zu erzeugen, dass sie Informationen über einen Tarif enthält, der auf das Parkereignis angewendet wird, und Informationen über einen Erzeugungszeitpunkt des Parkscheins in der Kennzeichnung enthält, oder die Informationen über einen Erzeugungszeitpunkt des Parkscheins zum Parkgebührzentrum sendet, um den Startzeitpunkt des Parkereignisses zu kennzeichnen.

## Revendications

1. Système pour le paiement de stationnement comprenant
un dispositif d'émission de tickets de stationnement (13, 23, 33), qui comprend des moyens d'émission d'un ticket de stationnement comprenant un identifiant individuel attribué au début d'un cycle de stationnement ;
un centre de paiement de stationnement (12, 21, 22, 31), qui exploite et traite les informations relatives au stationnement des véhicules dans au moins une zone de stationnement ; et
un dispositif de contrôle de sortie (14, 24, 34), qui comprend des moyens de vérification du paiement des droits pour le cycle de stationnement associé au ticket de stationnement et des moyens d'ouverture d'une barrière ou d'un élément similaire, **caractérisé en ce que**
le dispositif d'émission de tickets de stationnement (13, 23, 33) comprend des moyens permettant d'ajouter des informations à l'identifiant individuel de chaque ticket de stationnement, ces informations étant relatives au tarif appliqué au cycle de stationnement ;
le centre de paiement de stationnement (12, 21, 22, 31) est en liaison avec un réseau de communication mobile et comprend
des moyens de réception d'informations comprenant un identifiant individuel d'un ticket de stationnement comportant des informations sur un tarif appliqué à un cycle de stationnement, à partir d'une station mobile (MS), par l'intermédiaire dudit réseau de communication mobile, et des moyens de réception du moment d'émission du ticket de stationnement (moment auquel le ticket de stationnement a été émis), ce moment d'émission étant soit inclus dans l'identifiant individuel du ticket de stationnement, soit transmis par le dispositif d'émission de tickets de stationnement ;
des moyens permettant de déterminer l'heure de début et le prix du cycle de stationnement sur la base desdites informations reçues ;
des moyens de paiement des droits de stationnement ;
des moyens de production d'un code d'autorisation de sortie en réponse au paiement des droits de stationnement ; et
le dispositif de contrôle de sortie (14, 24, 34) comprend des moyens permettant de recevoir le ticket spécifique au code d'autorisation de sortie émis par le centre de paiement de stationnement (12, 21, 22, 31) ; et
des moyens d'ouverture d'une barrière ou d'un élément similaire en réponse à la détection du ticket de stationnement correspondant au code d'autorisation de sortie reçu.

2. Système pour le paiement de stationnement selon la revendication 1, **caractérisé en ce qu'**une connexion permettant la transmission de données a été installée entre le dispositif d'émission de tickets de stationnement (13, 23) et le centre de paiement de stationnement (12, 21, 22) pour transmettre le moment d'émission du ticket de stationnement, c'est-à-dire l'heure de début du cycle de stationnement, au centre de paiement de stationnement (12, 21, 22).

3. Système pour le paiement de stationnement selon la revendication 1 ou 2, **caractérisé en ce qu'**une connexion permettant la transmission de données a été installée entre le centre de paiement de stationnement (12, 31) et le dispositif de contrôle de sortie (14, 34) pour transmettre le code d'autorisation de sortie à partir du centre de paiement de stationnement (12, 31) jusqu'au dispositif de contrôle de sortie (14, 34) en réponse au paiement des droits de stationnement.

4. Système pour le paiement de stationnement selon l'une quelconque des revendications 1 à 3, **caractérisé en ce que** le système pour le paiement de stationnement comprend en outre des moyens de transmission d'une confirmation à la station mobile (MS) en réponse au paiement des droits de stationnement.

5. Système pour le paiement de stationnement pour exploiter et traiter les informations relatives au stationnement de véhicules, **caractérisé en ce que**
le centre de paiement de stationnement (12, 21, 22, 31) est en liaison avec un réseau de communication mobile et comporte
des moyens de réception d'informations comprenant un identifiant individuel d'un ticket de stationnement comprenant des informations sur un tarif appliqué à un cycle de stationnement, à partir d'une station mobile (MS), par l'intermédiaire dudit réseau de communication mobile, et des moyens de réception du moment d'émission du ticket de stationnement, ce moment d'émission étant soit inclus dans l'identifiant individuel du ticket de stationnement ou transmis par le dispositif d'émission de tickets de stationnement, et des moyens permettant de déterminer l'heure de début et le prix du cycle de stationnement sur la base des informations reçues ;
des moyens de paiement des droits de stationnement ; et
des moyens de production d'un code d'autorisation de sortie en réponse au paiement des droits de stationnement.

6. Dispositif d'émission de tickets de stationnement, qui comprend des moyens d'émission de ticket de stationnement comprenant un identifiant au début d'un cycle de stationnement, **caractérisé en ce que**
le dispositif d'émission de tickets de stationnement (13, 23, 33) comprend des moyens permettant d'ajouter au ticket de stationnement des informations nécessaires pour établir une connexion à un centre de paiement de stationnement (12, 21, 22, 31) pour payer des droits de stationnement à partir d'une station mobile (MS) en transmettant l'identifiant du ticket de stationnement au centre de paiement de stationnement par l'intermédiaire d'un réseau de communication mobile, et
le dispositif d'émission de tickets de stationnement est configuré pour produire l'identifiant pour le ticket de stationnement afin de contenir les informations sur un tarif appliqué au cycle de stationnement, et pour inclure des informations relatives au moment d'émission du ticket de stationnement dans l'identifiant ou pour transmettre lesdites informations relatives au moment d'émission du ticket de stationnement au centre de paiement de stationnement afin d'indiquer l'heure de début du cycle de stationnement.
